# EUROPÄISCHE PATENTSCHRIFT

(11) **EP 2 233 256 B1**
(45) Veröffentlichungstag und Bekanntmachung des Hinweises auf die Patenterteilung: **30.03.2011**
(21) Anmeldenummer: 10001584.1
(22) Anmeldetag: 17.02.2010
(51) Int. Cl.: B25J 18/06

(54) **Antriebsvorrichtung**
Drive device
Dispositif d'entraînement

(30) Priorität: 26.03.2009 DE 102009015977
(43) Veröffentlichungstag der Anmeldung: 29.09.2010
(73) Patentinhaber: FESTO AG & Co. KG, 73734 Esslingen (DE)
(72) Erfinder: Fischer, Markus, 73728 Essligen (DE); Neuhoff, Uwe, 73037 Göppingen (DE); Mangler, Christian, 7094 Filderstadt (DE)
(74) Vertreter: Abel, Martin

(56) Entgegenhaltungen:
- WO-A1-95/18311
- WO-A1-2007/069667
- DE-B3-102007 017 416
- FR-A1- 2 638 387
- US-A- 5 816 769

## Beschreibung

Die Erfindung betrifft eine Antriebsvorrichtung, mit mindestens einer Kraftübertragungsstruktur, die mindestens drei entsprechend dem Verlauf der Seitenkanten einer einen polygonförmigen Grundriss aufweisenden Pyramide nebeneinander angeordnete und an dem Kopfbereich fest miteinander verbundene, federelastisch biegbare Seitenholme aufweist, die durch Antriebsmittel relativ zueinander bewegbar sind, um eine Querauslenkung der Kraftübertragungsstruktur hervorzurufen,
wobei die Seitenholme in mindestens einem zwischen einem Basisbereich und einem Kopfbereich angeordneten koppelbereich durch ein starres koppelglied miteinander bewegungsgekoppelt sind. Eine solche Antriebsvorrichtung ist in der US 5816769 offenbart.

Eine in der WO 2008/128780 A1 anhand der dortigen Figur 26 beschriebene Antriebsvorrichtung wird für den Antrieb eines sogenannten Biegeschlagflügels eingesetzt und verfügt über eine Kraftübertragungsstruktur mit vier Seitenholmen, die entsprechend den Seitenkanten einer einen quadratischen Grundriss aufweisenden Pyramide angeordnet sind. An dem die Pyramidenspitze markierenden Kopfbereich sind die Seitenkanten fest miteinander verbunden, am entgegengesetzten Basisbereich können Antriebsmittel angreifen, um die Seitenholme relativ zueinander in Längsrichtung zu verschieben. Auf diese Weise kann der Kopfbereich seitwärts ausgelenkt werden, wobei er durch entsprechende Aktivierung der Antriebsmittel entlang einer konkav gewölbten Fläche bewegbar ist. Allerdings ist die Steifigkeit der Struktur nicht sehr ausgeprägt, und der mögliche Auslenkwinkel für den Kopfbereich ist sehr begrenzt. Für den Antrieb eines Flügels mag dies ausreichen, andere Anwendungen, beispielsweise in der Handhabungstechnik, erfordern allerdings einen größeren Aktionsradius.

In der EP 1 125 693 A1 wird ein parallelkinematisches System beschrieben, bei dem ein Endeffektor über ein Gestänge an den Abtriebsteilen mehrerer räumlich verteilt angeordneter Linearantriebe angeordnet ist, so dass er mit großem Aktionsradius räumlich positioniert werden kann. Dieses System erfordert allerdings einen sehr hohen konstruktiven Aufwand und wartet mit einem hohen Gewicht auf.

Aus der DE 10 2007 017 416 B3 ist eine Sortiervorrichtung bekannt, die über eine zweidimensionale Kraftübertragungsstruktur verfügt, welche sich aus zwei keilförmig aufeinander zu laufenden Seitenwangen zusammensetzt, die durch quer verlaufende, biegesteife Koppelstreben zu einer Weichenstruktur zusammengefasst sind. Das aufeinander abgestimmte lineare Verschieben der Seitenwangen durch zugeordnete Antriebsmittel ruft eine Schwenkbewegung der Weichenstruktur in einer Ebene hervor, so dass ihr Kopfbereich in unterschiedliche Sortierpositionen verlagerbar ist.

Die EP 1 040 999 A2 und die EP 1 203 640 A2 beschreiben auch jeweils zweidimensionale Strukturen bestehend aus keilförmig aufeinander zu laufenden Längsstreben, die durch gelenkig gelagerte Querstreben miteinander verbunden sind. Die Querstreben bewirken eine Bewegungskopplung der Längsstreben, so dass sich die Verformung der jeweils einen Längsstrebe unmittelbar auf die Verformung der anderen Längsstrebe auswirkt.

Aus der DE 10 2005 056 846 B4 und der DE 10 2005 046 160 C5 ist es bekannt, Antriebsvorrichtungen unter Verwendung eines generativen Fertigungsverfahrens herzustellen, wobei Komponenten, die ansonsten separat gefertigt und anschließend zusammengebaut werden, einstückig miteinander ausgebildet sind. Die Antriebsvorrichtungen weisen unter anderem einen durch interne Fluidbeaufschlagung verformbaren Faltenbalg auf.

Die EP 0 249 318 offenbart einen Gegenstands-Manipulator, der stabförmige Elemente aufweist, die linear verschiebbar sind, um einen Endeffektor im Raum zu positionieren. Die stabförmigen Elemente können durch elastisch dehnbare Mittel, beispielsweise ein Kabel, miteinander verbunden sein.

Aus der DE 10 2006 009 559 B3 ist eine Greifervorrichtung bekannt, die in der Art einer künstlichen Hand gestaltet ist und die durch ein generatives Fertigungsverfahren herstellbar ist.

Der vorliegenden Erfindung liegt die Aufgabe zugrunde, eine gewichtssparende und dennoch über eine hohe Steifigkeit verfügende Antriebsvorrichtung zu schaffen, die über einen großen Aktionsbereich verfügt.

Zur Lösung dieser Aufgabe ist in Verbindung mit den eingangs genannten Merkmalen vorgesehen, dass die Seitenholme sich ausgehend von dem Basisbereich in Richtung zu dem Kopfbereich aneinander annähern, und dass das Koppelglied an jedem Seitenholm unter Zwischenschaltung eines eine relative Schwenkbarkeit zwischen Seitenholm und Koppelglied ermöglichenden Gelenkes befestigt ist.

Auf diese Weise liegt eine dreidimensionale Kraftübertragungsstruktur vor, deren über biegeelastische Eigenschaften verfügenden Seitenholme zwischen dem Kopfbereich und dem Basisbereich einfach oder mehrfach gegenseitig abgestützt sind. Zur Abstützung dient ein im betreffenden Koppelbereich angeordnetes starres Koppelglied, durch das die Seitenholme auch dann auf Abstand zueinander gehalten werden, wenn sie zum Hervorrufen einer Querauslenkung relativ zueinander bewegt werden. Die Koppelglieder verhindern dabei ein Kollabieren der Kraftübertragungsstruktur selbst bei großer Baulänge derselben, wobei sich die Steifigkeit und das Formungsverhalten durch die Anzahl und die Wahl des gegenseitigen Abstandes der Koppelglieder beeinflussen lässt. Durch entsprechend aufeinander abgestimmte Aktivierung der einzelnen Seitenholme lässt sich die Kraftübertragungsstruktur, insbesondere in ihrem Kopfbereich, räumlich allseits quer auslenken, wobei die Gelenkverbindungen zwischen den Seitenholmen und jedem Koppelglied die Beweglichkeit begünstigen, so dass schon mit geringen Betätigungskräften große Auslenkwinkel in allen Richtungen möglich sind, beispielsweise bis zu 90° ausgehend von einer deaktivierten Grundstellung mit linearer Erstreckung der Kraftübertragungsstruktur.

Vorteilhafte Weiterbildungen der Erfindung gehen aus den Unteransprüchen hervor.

Um bestimmte Vorzugs-Verformungen zu generieren, könnte die Kraftübertragungsstruktur mit einem unregelmäßigen Vieleckgrundriss ausgeführt werden. Für universelle Einsätze empfiehlt es sich allerdings, die Seitenholme so zu arrangieren, dass sie längs den Seitenholmen einer mehreckigen Pyramide mit regelmäßigem Grundriss verlaufen.

Es hat sich gezeigt, dass die Stetigkeit der Auslenkbewegungen besonders ausgeprägt ist, wenn die Kraftübertragungsstruktur über eine ungerade Anzahl von Seitenholmen verfügt. Eine Gesamtanzahl von drei Seitenholmen scheint aus derzeitiger Sicht unter Berücksichtigung der Kosten und des erzielbaren Nutzens eine besonders gute Lösung darzustellen.

Die für die relative Schwenkbeweglichkeit zwischen den Koppelgliedern und den Seitenholmen verantwortlichen Gelenke sind insbesondere so ausgebildet, dass sie die relative Schwenkbeweglichkeit von Kugelgelenken bieten. Als besonders einfache Realisierungsform kann unmittelbar auf Kugelgelenke zurückgegriffen werden. Obgleich es prinzipiell möglich wäre, die Gelenke in Form materieller Verbindungsbereiche zwischen den Seitenholmen und den Koppelgliedern auszuführen, die aufgrund ihrer Beschaffenheit die gewünschte Schwenkbeweglichkeit gewährleisten, werden solche Ausbildungen von Gelenken vorgezogen, bei denen zwischen den relativ zueinander schwenkbaren Teilen keine materielle Verbindung vorliegt, so dass der Widerstand minimal ist und das Querauslenken der Kraftübertragungsstruktur mit hoher energetischer Effizienz durchgeführt werden kann.

Für die Formgebung des mindestens einen Koppelgliedes bieten sich mehrere Varianten an. Besonders vorteilhaft erscheinen sternförmige, rahmenförmige oder ringförmige Gestaltungen. Bei einer Sternform können sich ausgehend von einem zwischen den Seitenholmen liegenden Zentrum mehrere Querstreben sternförmig verteilt nach außen zu den Seitenholmen erstrecken. Bei einer rahmenförmigen Struktur sind zweckmäßigerweise mehrere sich linear zwischen benachbarten Seitenholmen erstreckende Querstreben vorhanden, so dass sie ein Polygon aufspannen, dessen Ecken im Bereich der einzelnen Seitenholme liegen. Eine Kraftübertragungsstruktur mit drei Seitenholmen verfügt dann beispielsweise über dreiecksförmig gestaltete Koppelglieder.

Ringförmige Koppelglieder haben zweckmäßigerweise einen vergleichbaren Aufbau wie die erwähnten rahmenförmigen Koppelglieder, jedoch sind die einzelnen Querstreben bogenförmig ausgeführt, so dass sich eine gewölbte Ringstruktur ergibt, insbesondere mit kreisförmiger Gestalt.

Bei einer bevorzugten Ausführungsform sind die Seitenholme als zug- und schubfeste Stäbe ausgebildet, beispielsweise als Glasfaserstäbe. Die gewünschte Querauslenkung kann hier sehr einfach dadurch realisiert werden, dass die Seitenholme durch auf sie einwirkende Antriebsmittel in Längsrichtung relativ zueinander verschoben werden. Hierzu können beispielsweise elektrisch und/oder fluidisch aktivierbare Linearaktuatoren eingesetzt werden.

Den gleichen Auslenkungseffekt kann man dadurch erzielen, dass man auf Seitenholme zurückgreift, die in sich längenvariabel sind. Hierbei könnte es sich beispielsweise um Teleskopstrukturen handeln. Besonders vorteilhaft wird allerdings eine solche Ausgestaltung der Seitenholme angesehen, bei der sie insgesamt oder wenigstens entlang eines oder mehrerer Längenabschnitte als faltenbalgartige Hohlkörper ausgebildet sind, die bei Fluidbeaufschlagung ihres Innenraumes ihre Länge verändern. Die Antriebsmittel können hierbei eine Steuerventileinrichtung beinhalten, die die Fluidbeaufschlagung steuert, wobei insbesondere eine proportionale Ansteuerung möglich ist, um eine stufenlose Querauslenkung der Kraftübertragungsstruktur zu ermöglichen.

Die Antriebsvorrichtung lässt sich zu vielfältigen Zwecken einsetzen. Eine bevorzugte Anwendung ist diejenige in der Handhabungstechnik, wobei dann am Kopfbereich der Kraftübertragungsstruktur ein als Greifvorrichtung ausgebildeter Endeffektor angeordnet sein kann, mit dem sich zwischen verschiedenen Örtlichkeiten umzusetzende Gegenstände ergreifen lassen. Ein Einsatz als Schweißvorrichtung wäre ebenfalls denkbar, wobei dann als Endeffektor eine Schweißelektrode vorgesehen wäre.

Die Antriebsvorrichtung kann mit beliebiger räumlicher Ausrichtung betrieben werden. Auch kann die Antriebsvorrichtung in sich bewegende Strukturen integriert werden, insbesondere auch in Fahrzeuge oder sonstige Geräte, die sich auf dem Lande, im Wasser oder in der Luft fortbewegen können.

Wenn an dem Kopfbereich ein Endeffektor angeordnet wird, kann durch den von den Seitenholmen umgrenzten Raum hindurch äußerst platzsparend und geschützt ein biegeflexibler Energieübertragungsstrang hindurchgeführt werden, der den Endeffektor mit seiner Betriebsenergie versorgt und über den auch Steuersignale oder von Sensoren erzeugte Rückmeldesignale übertragen werden können.

Die Antriebsvorrichtung kann zumindest teilweise oder auch in ihrer Gesamtheit durch ein generatives Fertigungsverfahren hergestellt werden, was den fertigungstechnischen Aufwand sehr gering hält und eine Struktur mit geringem Gewicht ermöglicht. Selbst die für die Verbindung zwischen den Seitenholmen und den Koppelgliedern zuständigen Gelenke können durch das generative Fertigungsverfahren erzeugt werden. Besonders zweckmäßig wird hierbei das sogenannte selektive Lasersintern (SLS) angesehen.

Nachfolgend wird die Erfindung anhand der beiliegenden Zeichnung näher erläutert. In dieser zeigen:
- Figur 1: eine bevorzugte erste Ausführungsform der erfin- dungsgemäßen Antriebsvorrichtung in einer perspek- tivischen Darstellung,
- Figur 2: die Antriebsvorrichtung aus Figur 1 in einer Sei- tenansicht, wobei in einem strichpunktiert umrahm- ten, vergrößerten Ausschnitt eine alternative Aus- gestaltung der Seitenholme angedeutet ist,
- Figur 3: einen mittleren Längenabschnitt der Kraftübertra- gungsstruktur in vergrößerter Darstellung,
- Figur 4: eine vergrößerte Teildarstellung der Kraftübertra- gungsstruktur im Kopfbereich,
- Figur 5: eine Einzeldarstellung eines der beim Ausführungs- beispiel der Figuren 1 bis 4 zur Anwendung gelan- genden Koppelglieder in einer Ansicht gemäß Schnittlinie V-V, wobei die sternförmige Struktur ersichtlich ist,
- Figur 6: in einer mit Figur 5 vergleichbaren Darstellungs- weise ein Koppelglied mit dreiecksförmiger Rahmen- struktur und
- Figur 7: in einer ebenfalls mit Figur 5 vergleichbaren Dar- stellungsweise ein kreisringförmig gestaltetes Kop- pelglied.

Die insgesamt mit Bezugsziffer 1 bezeichnete Antriebsvorrichtung wird im Folgenden anhand eines Anwendungsbeispiels in Form einer zum umpositionieren von Gegenständen 2 einsetzbaren Handhabungsvorrichtung beschrieben. Die Ausführungen sind jedoch nicht in diesem Sinne einschränkend zu verstehen.

Die Antriebsvorrichtung 1 verfügt über eine ähnlich einem Gerippe aufgebaute Kraftübertragungsstruktur 3, die sich im unbetätigten Zustand längs einer beim Ausführungsbeispiel vertikal orientierten Hauptachse 4 erstreckt. Ein bei diesem Anwendungsfall oben liegender Endbereich sei als Basisbereich 5 bezeichnet, der beim Ausführungsbeispiel nach unten weisende entgegengesetzte Endbereich als Kopfbereich 6.

Die Kraftübertragungsstruktur 3 verfügt über drei längsseits nebeneinander angeordnete, sich zwischen dem Basisbereich 5 und dem Kopfbereich 6 erstreckende Seitenholme 7, die über federelastisch biegbare Eigenschaften verfügen, in ihrer Längsrichtung jedoch über eine sehr hohe Zug- und Druckfestigkeit verfügen. Es handelt sich beispielsweise um Glasfaserstäbe.

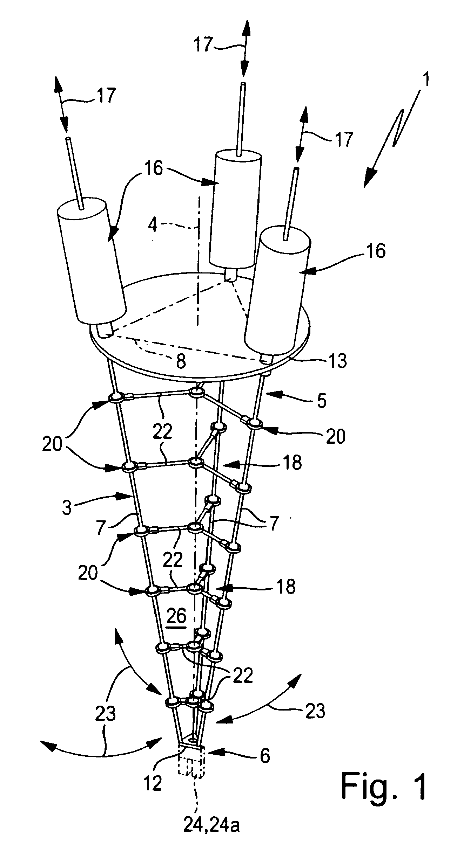

Im Basisbereich 5 ist der gegenseitige Abstand zwischen den Seitenholmen 7 größer als im Kopfbereich 6. Dies resultiert daraus, dass die Seitenholme 7 entsprechend dem Verlauf der Seitenkanten einer einen mehreckigen Grundriss aufweisenden Pyramide angeordnet sind, deren Spitze dem Kopfbereich 6 zugeordnet ist. In Figur 1 ist strichpunktiert bei 8 der gedachte, beim Ausführungsbeispiel dreieckige Grundriss der besagten Pyramide angedeutet. Im Querschnitt rechtwinkelig zur Hauptachse 4 gesehen liegen also die Seitenholme 7 in den Eckbereichen eines Polygons, im vorliegenden Fall eines Dreieckes.

Die Kraftübertragungsstruktur 3 könnte auch mehr als drei Seitenholme 7 aufweisen. Bei einer Anzahl von "n" Seitenholmen 7 hätte die zugeordnete Pyramidenstruktur den Grundriss eines n-Ecks. Als zweckmäßig hat es sich erwiesen, die Kraftübertragungsstruktur 3 mit einer ungeraden Anzahl von Seitenholmen 7 zu realisieren, wenngleich prinzipiell auch eine gerade Anzahl von Seitenholmen 7 möglich wäre.

Die von den Seitenholmen 7 eckpunktmäßig begrenzte Querschnittsfläche der Kraftübertragungsstruktur 3 verringert sich ausgehend von dem Basisbereich 5 hin zu dem Kopfbereich 6.

Die in Richtung zum Kopfbereich 6 hin konvergierenden Seitenholme 7 sind an dem Kopfbereich 6 fest und ungelenkig, vorzugsweise starr miteinander verbunden. Exemplarisch geschieht dies unter Mitwirkung einer starren Verbindungsplatte 12, an der alle Seitenholme 7 mit ihren Kopfenden starr befestigt sind. Die dem Kopfbereich 6 zugeordneten Endabschnitte der Seitenholme 7 sind nicht relativ zueinander verschwenkbar.

An dem Basisbereich 5 sind die Seitenholme 7 in ihrer Längsrichtung bewegbar aufgehängt. Eine im Basisbereich 5 angeordnete, beispielsweise platten-, scheiben- oder rahmenförmige Tragstruktur 13 trägt eine der Anzahl der Seitenholme 7 entsprechende Anzahl von Antriebseinheiten 14, die mit den zugeordneten Endabschnitten 15 der Seitenholme 7 auf beliebige Weise in Antriebsverbindung stehen. Die Antriebseinheiten 14 fungieren insgesamt als Antriebsmittel 16, mittels denen die Seitenholme 7 relativ zueinander bewegbar sind, wobei sie vorzugsweise so ausgebildet sind, dass sie den jeweils zugeordneten Seitenholm 7 in Achsrichtung seiner Längsachse gemäß Doppelpfeil 17 in beiden Richtungen verschieben können. Die Antriebsmittel 16 sind so ausgebildet, dass sie die Seitenholme 7 unabhängig voneinander antreiben können.

In mindestens einem sowohl zum Basisbereich 5 als auch zum Kopfbereich 6 in Achsrichtung der Hauptachse 4 beabstandeten Kopplungsbereich 18 sind die Seitenholme 7 durch je ein starres Koppelglied 22 miteinander verbunden. Das Koppelglied 22 besteht beispielsweise aus Metall oder einem harten Kunststoffmaterial. Die Anzahl der vorhandenen Kopplungsbereiche 18 hängt insbesondere von der Länge der Kraftübertragungsstruktur 3 ab. Exemplarisch verfügt die Kraftübertragungsstruktur 3 über insgesamt sechs in Achsrichtung der Hauptachse 4 beabstandet zueinander angeordnete Kopplungsbereiche 18 mit je einem Koppelglied 22. Es kann jedoch auch eine andere Anzahl vorhanden sein.

Die Verteilung der Koppelglieder 22 in Achsrichtung der Hauptachse 4 ist zweckmäßigerweise regelmäßig. Die Abstände sind beim Ausführungsbeispiel untereinander gleich.

Es ist also jedes Koppelglied 22 mit jedem der Seitenholme 7 verbunden. Die Verbindung ist so gewählt, dass zwischen dem Koppelglied 22 und jedem Seitenholm 7 eine Schwenkbeweglichkeit gegeben ist, ansonsten aber keine Bewegungsfreiheitsgrade vorliegen. Die Koppelglieder 22 sind mit jedem Seitenholm 7 unter Zwischenschaltung eines Gelenkes 20 befestigt, das die geschilderte Schwenkbeweglichkeit gewährleistet.

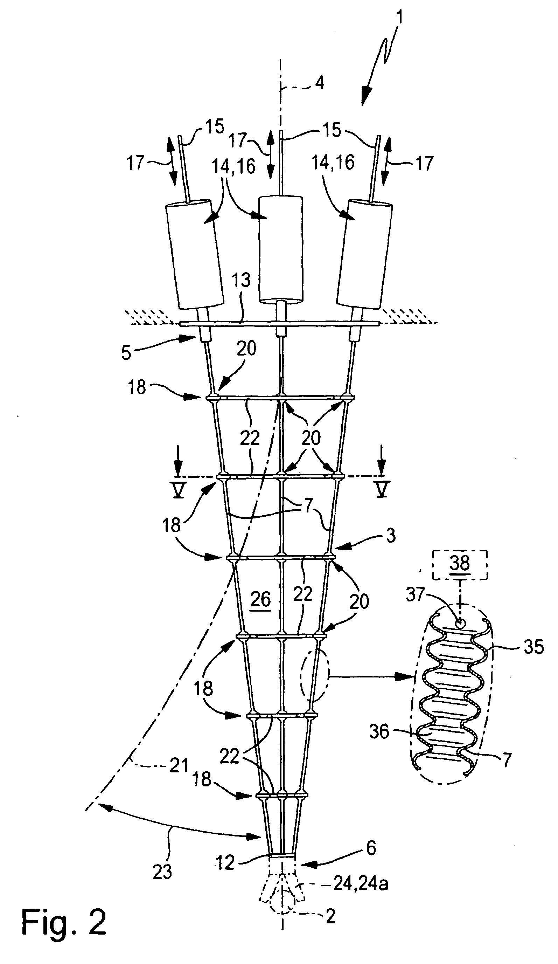

Bedingt dadurch, dass die Seitenholme 7 an ihrem Kopfbereich 6 starr miteinander verbunden sind, führt eine relative axiale Verlagerung der Seitenholme 7 - hervorgerufen durch die Antriebsmittel 16 - zu einer durch mehrere Doppelpfeile 23 exemplarisch angedeuteten Querauslenkung der Kraftübertragungsstruktur 3, also zu einem Verschwenken quer zu der Hauptachse 4. In Figur 2 ist strichpunktiert bei 21 eine der hierdurch erzielbaren ausgelenkten Positionen der Kraftübertragungsstruktur 3 angedeutet. Der Grad bzw. Winkel der Auslenkung nimmt aushehend vom Basisbereich 5 zum Kopfbereich 6 hin, wo er am größten ist, zu.

Durch aufeinander abgestimmte relative Positionierung der Seitenholme 7 kann die Kraftübertragungsstruktur 3 allseits radial bezüglich der Hauptachse 4 ausgelenkt werden. Der Kopfbereich 6 kann hierdurch an jedem beliebigen Punkt auf einer gedachten konvexen Schalenfläche positioniert werden. Hierbei ist insbesondere eine stufenlose Positionierung möglich, und durch Fixieren der jeweiligen Position der Seitenholme 7 kann die eingestellte Auslenkposition so lange wie gewünscht beibehalten werden.

Die Koppelglieder 22 bewirken eine Aussteifung der Seitenholme 7 in ihrer Querrichtung und stabilisieren die Struktur in sich. Gleichzeitig wird dabei erreicht, dass die Kraftübertragungsstruktur 3 beim Auslenken sehr stark gekrümmt werden kann ohne abzuknicken. Beim Ausführungsbeispiel besteht die Möglichkeit, die Kraftübertragungsstruktur 3 mit ihrem Kopfbereich 6 mindestens so weit seitwärts auszulenken, dass eine 90°-Krümmung vorliegt. Somit verfügt die Antriebsvorrichtung 1 über einen sehr großen Arbeitsbereich.

Durch die Wahl gleicher Abstände zwischen den Kopplungsbereichen 18 lässt sich eine gleichförmige Krümmung beim Auslenken der Kraftübertragungsstruktur 3 erreichen. Man hat jedoch auch die Möglichkeit, auf unterschiedlich große Abstände zurückzugreifen, um das Auslenkverhalten zu beeinflussen.

Von Vorteil ist es, wenn der von den Seitenholmen 7 aufgespannte Grundriss 8 ein regelmäßiges Polygon ist. Exemplarisch hat er die Form eines gleichseitigen Dreieckes. Auch hier besteht allerdings die Möglichkeit, den Grundriss 8 nach Art eines unregelmäßigen Vieleckes zu gestalten.

Bei den Antriebseinheiten 14 handelt es sich beispielsweise um Linearaktuatoren, insbesondere elektrische und/oder durch

Fluidkraft aktivierbare Linearantriebe. Prinzipiell ist man aber nicht an eine bestimmte Art von Antriebseinheiten 14 gebunden.

Bei dem abgebildeten Anwendungsbeispiel ist stirnseitig an der Verbindungsplatte 12 des Kopfbereiches 6 ein strichpunktiert angedeuteter Endeffektor 24 angeordnet. Es kann sich dabei beispielsweise um ein Bearbeitungswerkzeug handeln oder um eine Schweißvorrichtung. Bei der in der Zeichnung illustrierten Variante handelt es sich um eine Greifvorrichtung 24a, die ausgebildet ist, um vorübergehend einen strichpunktiert angedeuteten Gegenstand 2 zu ergreifen, der im Rahmen der Auslenkbewegung 23 zwischen zwei Positionen umgesetzt werden soll. Der Endeffektor 24 ist beim Ausführungsbeispiel lösbar an der Kraftübertragungsstruktur 3 angeordnet. In diesem Zusammenhang bildet die Verbindungsplatte 12 ein Mittel zur lösbaren Befestigung des Endeffektors 24. Der Endeffektor 24 kann aber auch mit der Kraftübertragungsstruktur 3 zu einer integralen Baueinheit zusammengefasst sein.

Die beim Ausführungsbeispiel vorhandene Greifvorrichtung 24a ist als Backengreifer konzipiert und kann durch Fluidkraft betätigt werden. Für die Zu- und Abfuhr des hierzu eingesetzten Druckmediums kann ein aus einem oder mehreren Fluidschläuchen gebildeter biegeflexibler Energieübertragungsstrang 25 genutzt werden, der sich ausgehend von dem dem Basisbereich 5 zugeordneten Endbereich der Aufnahmevorrichtung 1 durch den von den Seitenholmen 7 umgrenzten Innenraum 26 der Kraftübertragungsstruktur 3 hindurch erstreckt, bis hin zum Kopfbereich 6 und dem dort angeordneten Endeffektor 24.

Der Energieübertragungsstrang 25 wird zweckmäßigerweise durch die Koppelglieder 22 gehalten. Exemplarisch verfügt jedes Koppelglied 22 über eine zum beispiel ösenförmige Durchgangsöffnung 27, durch die sich der Energieübertragungsstrang 25 hindurch erstreckt. Der Energieübertragungsstrang 25 ist durch Durchgangsöffnungen 27 sämtlicher Kopplungsglieder 22 hindurchgefädelt und bleibt somit stets innerhalb des Innenraumes 26, unabhängig vom momentanen Auslenkwinkel der Kraftübertragungsstruktur 3.

Die Gelenke 20 sind zweckmäßigerweise so ausgebildet, dass sie den durch sie verbundenen Komponenten 22, 7 die relative Schwenkbeweglichkeit eines Kugelgelenkes zur Verfügung stellen. Exemplarisch sind sie hierzu unmittelbar als Kugelgelenke ausgebildet und verfügen über jeweils eine am Seitenholm 7 angeordnete Lagerkugel 28, die von einer innen sphärisch profilierten, am Koppelglied 22 angeordneten Kugelaufnahme 32 umgriffen ist.

Die Gelenke 20 sind so ausgebildet, dass zwischen der Lagerkugel 28 und der Kugelaufnahme 32 und mithin zwischen den gelenkig miteinander zu verbindenden Komponenten 22, 7 keine materielle Verbindung vorliegt, also kein Materialverbund, wie er beispielsweise bei sogenannten Filmscharnieren gegeben ist. Auf diese Weise ist eine extreme Leichtgängigkeit bei der Schwenkbewegung gewährleistet, und ein Gelenkbruch kann von vorneherein ausgeschlossen werden. Gleichwohl besteht die Option, die Gelenke 20 durch materielle Verbindung der aneinander anzulenkenden Komponenten 22, 7 zu realisieren, beispielsweise durch einen dünnen Materialsteg, der die für die Schwenkbewegung angestrebten Freiheitsgrade zulässt.

Die in sich starren Koppelglieder 22 können unterschiedliche Formgebungen aufweisen. Zweckmäßig ist es allerdings, die in ein und derselben Kraftübertragungsstruktur 3 integrierten Koppelglieder 22 untereinander - abgesehen von den abweichenden Abmessungen - in gleicher Weise zu strukturieren.

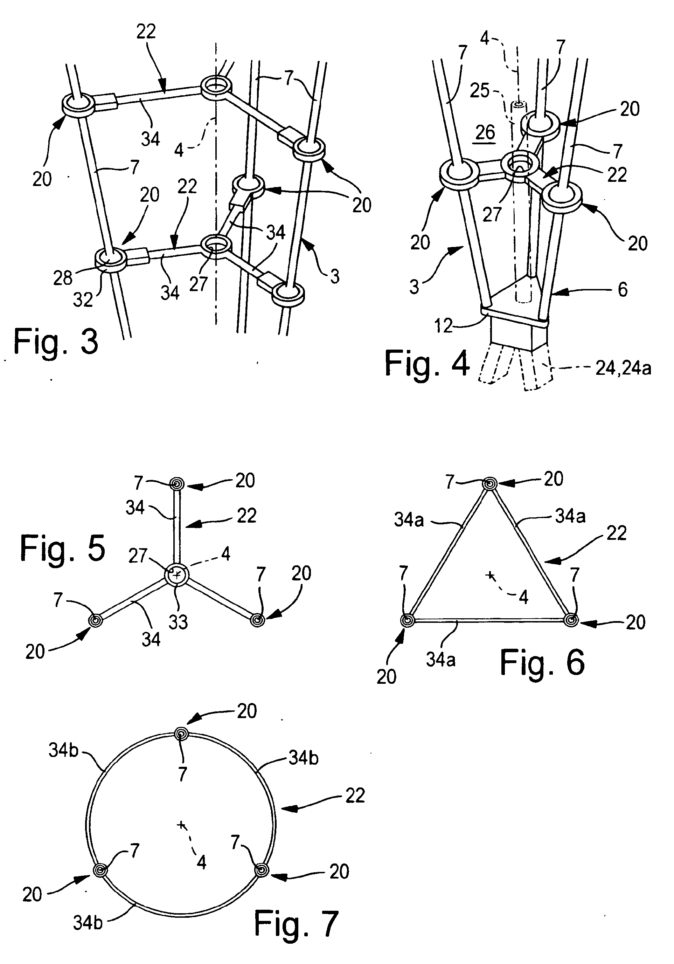

Beim Ausführungsbeispiel der Figuren 1 bis 5 sind die Koppelglieder sternförmig gestaltet. Die Figur 5 zeigt eine Einzeldarstellung eines solchen sternförmigen Koppelgliedes 22. Ausgehend von einem Zentrum 33, das gegebenenfalls von der Durchgangsöffnung 27 durchsetzt sein kann, erstrecken sich hier in radialer Richtung mehrere starre Querstreben 34 radial nach außen, die mit ihren dem Zentrum 33 entgegengesetzten äußeren Endabschnitten an jeweils einem der Seitenholme 7 angelenkt sind. Die Anzahl der Querstreben 34 entspricht also derjenigen der Seitenholme 7. An den äußeren Endbereichen der Querstreben 34 ist beim Ausführungsbeispiel jeweils eine der schon erwähnten Kugelaufnahmen 32 angeordnet.

Es handelt sich vorzugsweise um eine regelmäßige Sternform. Nimmt die Kraftübertragungsstruktur 3 ihre linear gestreckte Grundstellung ein, liegt das Zentrum der Koppelglieder 22 auf der Hauptachse 4.

Die Figur 6 zeigt die alternative Gestaltung eines Koppelgliedes 22 mit rahmenförmiger Struktur. Das Koppelglied 22 hat eine der Anzahl der Seitenholme 7 entsprechende Anzahl von Querstreben 34a, die sich jeweils linear zwischen in Umfangsrichtung um die Hauptachse 4 herum benachbarten Seitenholmen 7 erstrecken. Dementsprechend hat das Koppelglied 22 hier eine dem Grundriss 8 ähnliche Struktur, von dem Grundriss 8 lediglich abweichend in der Länge der Querstreben 34a. Diese Länge nimmt mit zunehmender Entfernung vom Basisbereich 5 ab, was im Übrigen auch für die Querstreben 34 gemäß Figur 5 gilt. Beispielhaft verfügt das Koppelglied 22 gemäß Figur 6 über eine dreieckige Rahmenstruktur.

Bei dem Ausführungsbeispiel der Figur 6 sind an jeder Kugelaufnahme 32 zwei Querstreben 34a befestigt, die sich zu den Kugelaufnahmen 32 der beiden in einander entgegengesetzten Umfangsrichtungen benachbarten Gelenken 20 erstrecken.

Das Koppelglied gemäß Figur 7 ist ringförmig ausgebildet. Vorzugsweise hat es die Form eines Kreisringes. Die Anordnung entspricht derjenigen aus Figur 6 mit dem Unterschied, dass die Querstreben 34b bogenförmig ausgebildet sind und sich insbesondere zu einer kontinuierlichen und vorzugsweise stetigen Ringstruktur ergänzen.

Vergleicht man die verschiedenen Koppelglieder der Figuren 5 bis 7 miteinander, ergeben sich relevante Unterschiede in Bezug auf die Platzierung der Querstreben 34. Bezogen auf eine imaginäre Pyramide, deren Seitenkanten von den Seitenholmen 7 gebildet sind und die über zwischen jeweils benachbarten Seitenholmen 7 angeordnete Mantelflächen verfügt, liegen die Querstreben 34 beim Ausführungsbeispiel der Figur 5 im Innenraum 26 der Pyramide, beim Ausführungsbeispiel der Figur 6 mit parallelem Verlauf auf den genannten Mantelflächen und beim Ausführungsbeispiel der Figur 7 außerhalb der Pyramide. Beim Ausführungsbeispiel der Figur 7 besteht die vorteilhafte Möglichkeit, die konvex nach außen ragenden Querstreben 34 zu nutzen, um die Kraftübertragungsstruktur 3 mit einer flexiblen Umhüllung zu versehen und dadurch die Kraftübertragungsstruktur 3 nach außen hin abzudecken.

In Figur 2 ist in dem strichpunktiert umrahmten vergrößerten Ausschnitt ein Detail einer modifizierten Kraftübertragungsstruktur 3 gezeigt, die sich dadurch auszeichnet, dass die Seitenholme über wenigstens einen Teil ihrer Länge als in sich längenvariable Strukturen ausgebildet sind. Die Querauslenkung 23 wird hier dadurch realisiert, dass die Seitenholme 7 durch entsprechende Aktivierung verlängert oder verkürzt werden.

Als bevorzugte Möglichkeit zur Realisierung dieses Betriebsverhaltens wird es angesehen, die Seitenholme in einem oder mehreren Längenabschnitten oder vorzugsweise über ihre gesamte Länge hinweg als faltenbalgartige Hohlkörper 35 auszuführen, die axial komprimierbar und ausdehnbar sind. Die Längenveränderung wird dadurch hervorgerufen, dass der Innenraum 36 des jeweiligen Hohlkörpers 35 gesteuert mit einem fluidischen Druckmedium beaufschlagt wird. Durch Erhöhen des Innendruckes beziehungsweise der Füllmenge an Fluid dehnt sich der betreffende Seitenholm 7 unter gleichzeitigem axialem Aufspreizen der Falten des Hohlkörpers 35 axial aus. Wird der Innendruck vermindert, zieht sich der Hohlkörper 35 wieder in seine neutrale Grundstellung zusammen.

Stirnseitig und/oder an einer oder mehreren über die Länge des Seitenholmes 7 verteilten Stellen befindet sich mindestens eine Anschlussöffnung 37, über die die Einspeisung und Abfuhr des Druckmediums vorgenommen werden kann, bei dem es sich insbesondere um Druckluft handelt.

Als Antriebsmittel 16 für diese Variante der Antriebsvorrichtung 1 wird insbesondere eine Steuerventileinrichtung 38 eingesetzt, mit der sich die Fluidbeaufschlagung der Innenräume 36 der verschiedenen Seitenholme 7 unabhängig voneinander steuern lässt.

Der sich aus einem oder mehreren faltenbalgartigen Hohlkörpern 35 zusammensetzende Seitenholm 7 besteht zweckmäßigerweise aus einem federelastisch verformbaren Kunststoffmaterial, insbesondere einem Polyamid-Kunststoff.

Die Lagerkugeln 28 können bei diesem Ausführungsbeispiel von formstabilen Zwischenabschnitten zwischen axial aufeinanderfolgenden faltenbalgartigen Hohlkörpern 35 gebildet sein, wobei all diese Komponenten zweckmäßigerweise ein einstückiges Gebilde sind. Bei den Lagerkugeln 28 kann es sich hierbei um Hohlkugeln handeln, so dass der gesamte Seitenholm 7 einen durchgehenden Hohlraum ausbilden kann.

Es versteht sich, dass der Begriff "Lagerkugel" keine vollständig geschlossene Kugelfläche am Außenumfang erfordert, sondern es ausreicht, wenn eine umlaufende Lagerfläche definiert wird, die der Mantelfläche einer insbesondere im diametralen Bereich einer Kugel liegenden Kugelzone entspricht. Dies gilt für alle Ausführungsbeispiele.

Insbesondere diejenige Ausführungsform, bei der die Seitenholme 7 ganz oder teilweise aus faltenbalgartigen Hohlkörpern 35 gebildet sind, aber auch alle anderen Bauformen der Kraftübertragungsstruktur 3, lassen sich in besonders vorteilhafter Weise durch ein generatives Fertigungsverfahren erzeugen. Hierbei besteht die Möglichkeit, einige oder sämtliche Komponenten der Kraftübertragungsstruktur 3 als Baueinheit generativ herzustellen, vorzugsweise durch selektives Lasersintern. Selbst die Gelenke 20 lassen sich auf diese Weise realisieren. Das Herstellungsverfahren eignet sich insbesondere für mittlere bis kleine Strukturgrößen und bietet neben einer einfachen Handhabung auch den Vorteil, dass die erzeugten Komponenten über ein nur geringes Gewicht verfügen und folglich die Kraftübertragungsstruktur 3 mit einem guten energetischen Wirkungsgrad betrieben werden kann.

## Patentansprüche

1. Antriebsvorrichtung, mit mindestens einer Kraftübertragungsstruktur (3), die mindestens drei entsprechend dem Verlauf der Seitenkanten einer einen polygonförmigen Grundriss (8) aufweisenden Pyramide nebeneinander angeordnete und an dem Kopfbereich (6) fest miteinander verbundene, federelastisch biegbare Seitenholme (7) aufweist, die durch Antriebsmittel (16) relativ zueinander bewegbar sind, um eine Querauslenkung der Kraftübertragungsstruktur (3) hervorzurufen, wobei die Seitenholme (7) in mindestens einem zwischen einem Basisbereich (5) und einem Kopfbereich (6) angeordneten Koppelbereich (18) durch ein starres Koppelglied (22) miteinander bewegungsgekoppelt sind, **dadurch gekennzeichnet, dass** die Seitenholme (7) sich ausgehend von dem Basisbereich (5) in Richtung zu dem Kopfbereich (6) aneinander annähern , und dass das Koppelglied (22) an jedem Seitenholm (7) unter Zwischenschaltung eines eine relative Schwenkbarkeit zwischen Seitenholm (7) und Koppelglied (22) ermöglichenden Gelenkes (20) befestigt ist.

2. Antriebsvorrichtung nach Anspruch 1, **dadurch gekennzeichnet, dass** zwischen dem Basisbereich (5) und dem Kopfbereich (6) mehrere in Längsrichtung der Seitenholme (7) zueinander beabstandete Koppelbereiche (18) mit an jeweils allen Seitenholmen (7) gelenkig befestigten Koppelgliedern (22) vorhanden sind.

3. Antriebsvorrichtung nach Anspruch 1 oder 2, **dadurch gekennzeichnet, dass** die dem Seitenholmverlauf zugrundeliegende Pyramide einen entsprechend einem regelmäßigen Polygon geformten Grundriss (8) aufweist und/oder dass die Kraftübertragungsstruktur (3) eine ungerade Anzahl von Seitenholmen (7) aufweist.

4. Antriebsvorrichtung nach einem der Ansprüche 1 bis 3, **dadurch gekennzeichnet, dass** die das Koppelglied (22) mit den Seitenholmen (7) verbindenden Gelenke (20) jeweils derart ausgebildet sind, dass sie die relative Beweglichkeit eines Kugelgelenkes zur Verfügung stellen und insbesondere unmittelbar als Kugelgelenke ausgebildet sind.

5. Antriebsvorrichtung nach einem der Ansprüche 1 bis 4, **dadurch gekennzeichnet, dass** die Gelenke (20) so ausgebildet sind, dass zwischen den relativ zueinander schwenkbaren Teilen (7, 22) keine materielle Verbindung vorliegt.

6. Antriebsvorrichtung nach einem der Ansprüche 1 bis 5, **dadurch gekennzeichnet, dass** das mindestens eine Koppelglied (22) sternförmig, rahmenförmig oder ringförmig ausgebildet ist.

7. Antriebsvorrichtung nach einem der Ansprüche 1 bis 6, **dadurch gekennzeichnet, dass** das mindestens eine Koppelglied (22) innerhalb oder außerhalb einer imaginären Pyramide angeordnet ist, deren Seitenkanten durch die Seitenholme (7) gebildet sind.

8. Antriebsvorrichtung nach einem der Ansprüche 1 bis 7, **dadurch gekennzeichnet, dass** die Antriebsmittel (16) derart ausgebildet sind, dass sie eine voneinander unabhängige Bewegung der einzelnen Seitenholme (7) in deren Längsrichtung hervorrufen können.

9. Antriebsvorrichtung nach einem der Ansprüche 1 bis 8, **dadurch gekennzeichnet, dass** die Seitenholme (7) als zug- und schubfeste Stäbe ausgebildet sind, insbesondere als Glasfaserstäbe.

10. Antriebsvorrichtung nach einem der Ansprüche 1 bis 9, **dadurch gekennzeichnet, dass** die Antriebsmittel (16) im Basisbereich (5) der Kraftübertragungsstruktur (3) an den Seitenholmen (7) angreifen und beispielsweise als elektrisch und/oder fluidisch aktivierbare Linearaktuatoren ausgebildet sind.

11. Antriebsvorrichtung nach einem der Ansprüche 1 bis 10, **dadurch gekennzeichnet, dass** die Seitenholme (7) über wenigstens einen Teil ihrer Länge als in sich längenvariable Strukturen ausgebildet sind.

12. Antriebsvorrichtung nach Anspruch 11, **dadurch gekennzeichnet, dass** die Seitenholme (7) zumindest abschnittsweise und vorzugsweise über ihre gesamte Länge hinweg als faltenbalgartige Hohlkörper (35) ausgebildet sind, deren Innenraum zur Variation der Länge des zugeordneten Seitenholmes (7) gesteuert mit einem fluidischen Druckmedium beaufschlagbar ist.

13. Antriebsvorrichtung nach einem der Ansprüche 1 bis 12, **dadurch gekennzeichnet, dass** am Kopfbereich (6) der Kraftübertragungsstruktur (3) ein Endeffektor (24) oder wenigstens Mittel zur Befestigung eines Endeffektors (24) angeordnet ist bzw. sind, wobei der Endeffektor (24) insbesondere eine zum lösbaren Greifen von Gegenständen geeignete Greifvorrichtung (24a) ist.

14. Antriebsvorrichtung nach Anspruch 13, **dadurch gekennzeichnet, dass** durch den von den Seitenholmen (7) gemeinsam umgrenzten Innenraum (26) der Kraftübertragungsstruktur (3) hindurch ein zum Kopfbereich (6) führender biegeflexibler Energieübertragungsstrang (25) verläuft, der mit einem Endeffektor (24) verbunden oder verbindbar ist.

15. Antriebsvorrichtung nach einem der Ansprüche 1 bis 14, **dadurch gekennzeichnet, dass** die Kraftübertragungsstruktur (3) zumindest teilweise und vorzugsweise in ihrer Gesamtheit als durch ein generatives Fertigungsverfahren, insbesondere durch selektives Lasersintern, hergestellte Baueinheit ausgebildet ist.

## Claims

1. Drive unit, with at least one power transmission structure (3) which has three spring-elastic, flexible side struts (7), arranged next to one another and congruent with the course of the side edges of a pyramid with a polygonal layout (8), and firmly joined together at the head section (6), and which may be moved relative to one another by drive means (16) to generate a transverse deflection of the power transmission structure (3), wherein the side struts (7) are movement-coupled to one another by a rigid connecting member (22) in at least one connecting area (18) located between a base section (5) and a head section (6), **characterised in that** the side struts (7) approach one another from the base section (5) towards the head section (6), and that the connecting member (22) is fastened to each side strut (7) with the interposition of a joint (20) allowing relative pivoting between side strut (7) and connecting member (22).

2. Drive unit according to claim 1 **characterised in that**, between the base section (5) and the head section (6) there are several connecting areas (18), spaced apart in the longitudinal direction of the side struts (7), with connecting members (22) hinged at all side struts (7) in each case.

3. Drive unit according to claim 1 or 2, **characterised in that** the pyramid on which the side strut pattern is based has a layout (8) based on a regular polygon and/or that the power transmission structure (3) has an uneven number of side struts (7).

4. Drive unit according to any of claims 1 to 3, **characterised in that** the joints (20) connecting the connecting member (22) to the side struts (7) are each formed in such way that they provide the relative mobility of a ball joint and in particular are directly in the form of ball joints.

5. Drive unit according to any of claims 1 to 4, **characterised in that** the joints (20) are so formed that there is no physical connection between parts (7, 22) able to pivot relative to one another.

6. Drive unit according to any of claims 1 to 5, **characterised in that** at least one connecting member (22) is star-shaped, frame-shaped or annular.

7. Drive unit according to any of claims 1 to 6, **characterised in that** at least one connecting member (22) is located inside or outside an imaginary pyramid, the side edges of which are formed by the side struts (7).

8. Drive unit according to any of claims 1 to 7, **characterised in that** the drive means (16) are so designed that they are able to generate a movement of the individual side struts (7) in their longitudinal direction independent of one another.

9. Drive unit according to any of claims 1 to 8, **characterised in that** the side struts (7) are in the form of tension- and shear-resistant rods, in particular fibreglass rods.

10. Drive unit according to any of claims 1 to 9, **characterised in that** the drive means (16) act on the side struts (7) in the base section (5) of the power transmission structure (3) and are for example in the form of electrically and/or fluidically actuable linear actuators.

11. Drive unit according to any of claims 1 to 10, **characterised in that** the side struts (7) are structures of intrinsically variable length over at least part of their length.

12. Drive unit according to claim 11, **characterised in that** the side struts (7) are in the form of bellows-type hollow bodies (35), at least in sections and preferably over their entire length, with interiors which may be supplied in a controlled manner with a fluidic pressure medium to vary the length of the assigned side strut (7).

13. Drive unit according to any of claims 1 to 12, **characterised in that** an end effector (24) or at least means of attaching an end effector (24) is or are provided in the head section (6) of the power transmission structure (3), wherein the end effector (24) is in particular a gripping device (24a) suitable for the releasable gripping of objects.

14. Drive unit according to claim 13, **characterised in that** a flexible power transmission line (25) connected or connectable to an end effector (24) runs to the head section (6) through the interior (26) of the power transmission structure (3) bounded jointly by the side struts (7).

15. Drive unit according to any of claims 1 to 14, **characterised in that** the power transmission structure (3) is at least partly and preferably wholly in the form of a standardised component produced by a generative production process, in particular by selective laser sintering.

## Revendications

1. Dispositif d'entraînement comportant au moins une structure de transmission de force (3) qui présente au moins trois longerons latéraux (7) flexibles élastiquement, reliés fixement les uns aux autres sur la zone de tête (6) et disposés les uns à côté des autres selon le tracé des arêtes latérales d'une pyramide présentant une projection horizontale (8) polygonale, lesquels peuvent être déplacés les uns par rapport aux autres par des moyens d'entraînement (16) afin de susciter une déviation transversale de la structure de transmission de force (3), les longerons latéraux (7) étant couplés en déplacement dans au moins une zone de couplage (18) disposée entre une zone de base (5) et une zone de tête (6) par un organe de couplage rigide (22), **caractérisé en ce que** les longerons latéraux (7) s'approchent les uns des autres en partant de la zone de base (5) en direction de la zone de tête (6) et **en ce que** l'organe de couplage (22) est fixé sur chaque longeron latéral (7) en intercalant une articulation (20) permettant une possibilité de pivotement relative entre le longeron latéral (7) et l'organe de couplage (22).

2. Dispositif d'entraînement selon la revendication 1, **caractérisé en ce que** plusieurs zones de couplage (18) espacées les unes des autres dans le sens longitudinal des longerons latéraux (7) sont présentes avec des organes de couplage (22) fixés de manière articulée respectivement à tous les longerons latéraux (7) entre la zone de base (5) et la zone de tête (6).

3. Dispositif d'entraînement selon la revendication 1 ou 2, **caractérisé en ce que** la pyramide à la base du tracé de longeron latéral présente une projection horizontale (8) formée selon un polygone régulier et/ou **en ce que** la structure de transmission de force (3) présente un nombre impair de longerons latéraux (7).

4. Dispositif d'entraînement selon l'une quelconque des revendications 1 à 3, **caractérisé en ce que** les articulations (20) reliant l'organe de couplage (22) aux longerons latéraux (7) sont réalisées respectivement de telle manière qu'elles mettent à disposition la mobilité relative d'une articulation sphérique et soient réalisées en particulier directement comme des articulations sphériques.

5. Dispositif d'entraînement selon l'une quelconque des revendications 1 à 4, **caractérisé en ce que** les articulations (20) sont réalisées de sorte qu'aucune liaison matérielle n'existe entre les parties (7, 22) pouvant pivoter les unes par rapport aux autres.

6. Dispositif d'entraînement selon l'une quelconque des revendications 1 à 5, **caractérisé en ce qu'**au moins un organe de couplage (22) est réalisé en forme d'étoile, de cadre ou d'anneau.

7. Dispositif d'entraînement selon l'une quelconque des revendications 1 à 6, **caractérisé en ce qu'**au moins un organe de couplage (22) est disposé dans ou en dehors d'une pyramide imaginaire, dont les arêtes latérales sont formées par les longerons latéraux (7).

8. Dispositif d'entraînement selon l'une quelconque des revendications 1 à 7, **caractérisé en ce que** les moyens d'entraînement (16) sont réalisés de manière à pouvoir susciter un mouvement indépendant des longerons latéraux individuels (7) dans leur sens longitudinal.

9. Dispositif d'entraînement selon l'une quelconque des revendications 1 à 8, **caractérisé en ce que** les longerons latéraux (7) sont réalisés comme des barres résistantes à la traction et au cisaillement, en particulier des barres de fibres de verre.

10. Dispositif d'entraînement selon l'une quelconque des revendications 1 à 9, **caractérisé en ce que** les moyens d'entraînement (16) sont appliqués sur les longerons latéraux (7) dans la zone de base (5) de la structure de transmission de force (3) et sont réalisés par exemple comme des actionneurs linéaires pouvant être activés par voie électrique et/ou fluidique.

11. Dispositif d'entraînement selon l'une quelconque des revendications 1 à 10, **caractérisé en ce que** les longerons latéraux (7) sont réalisés sur au moins une partie de leur longueur comme des structures dont la longueur est variable en soi.

12. Dispositif d'entraînement selon la revendication 11, **caractérisé en ce que** les longerons latéraux (7) sont réalisés au moins par endroits et de préférence au-delà de toute leur longueur comme des corps creux (35) de type soufflet, dont l'espace intérieur peut être alimenté de manière commandée en un agent de pressurisation fluidique pour la variation de la longueur du longeron latéral associé (7).

13. Dispositif d'entraînement selon l'une quelconque des revendications 1 à 12, **caractérisé en ce qu'**un effecteur terminal (24) ou au moins des moyens pour la fixation d'un effecteur terminal (24) sont prévus sur la zone de tête (6) de la structure de transmission de force (3), l'effecteur terminal (24) étant en particulier un dispositif de préhension (24a) approprié à la préhension détachable d'objets.

14. Dispositif d'entraînement selon la revendication 13, **caractérisé en ce qu'**un brin de transmission d'énergie (25) flexible menant à la zone de tête (6) qui est ou peut être relié à un effecteur terminal (24), s'étend au travers de l'espace intérieur (26) délimité en commun par les longerons latéraux (7) de la structure de transmission de force (3).

15. Dispositif d'entraînement selon l'une quelconque des revendications 1 à 14, **caractérisé en ce que** la structure de transmission de force (3) est réalisée au moins en partie et de préférence dans son ensemble comme une unité de construction fabriquée par un procédé de fabrication génératif, en particulier par un frittage sélectif au laser.
